# EUROPEAN PATENT SPECIFICATION

(11) **EP 4 333 171 B1**
(45) Date of publication and mention of the grant of the patent: **01.10.2025**
(21) Application number: 23799553.5
(22) Date of filing: 09.03.2023
(51) Int. Cl.: H01M 50/20, H01M 50/572, H01M 50/242, H01M 50/249, H01M 50/569, H01M 50/581, H01M 50/258, H01M 10/48, H01M 50/204, H01M 50/209, H01M 50/505, H01M 50/507

(54) **BATTERY PACK CONFIGURED SUCH THAT SELECTIVE SEPARATION OF BATTERY MODULES IS POSSIBLE**
BATTERIEPACK KONFIGURIERT FÜR DIE SELEKTIVE TRENNUNG VON BATTERIEMODULEN
PACK DE BATTERIE CONFIGURÉ POUR LA SÉPARATION SÉLECTIVE DES MODULES DE BATTERIE

(30) Priority: 02.05.2022 KR 20220054023
(43) Date of publication of application: 06.03.2024
(73) Proprietor: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2023/003242
(87) International publication number: WO 2023/214670

(56) References cited:
- EP-A1- 3 624 300
- CN-U- 205 069 737
- CN-U- 212 587 677
- CN-U- 216 252 198
- DE-A1- 102016 217 935
- JP-A- 2017 098 115
- KR-A- 20200 030 488
- KR-A- 20200 132 628
- KR-A- 20220 014 575
- KR-A- 20220 045 616
- US-A- 5 432 019
- US-A1- 2013 089 990

## Description

### [Technical Field]

This application claims the benefit of priority to Korean Patent Application No. 2022-0054023 filed on May 2, 2022.

The present invention relates to a battery pack configured such that selective separation of battery modules is possible, and more particularly to a battery pack configured such that selective separation of battery modules is possible, wherein a specific battery module in which fire has broken out or a specific battery module having a high possibility of fire outbreak is separated from the battery pack, whereby it is possible to prevent a major accident, such as explosion.

### [Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles.

In order to satisfy demand of users, a plurality of battery cells is disposed in a small-sized device, whereas a battery module including a plurality of battery cells electrically connected to each other or a battery pack including a plurality of battery modules is used in a vehicle, etc.

Among secondary batteries, a lithium battery, which is known as having high storage capacity per unit area and being most efficient, is most widely used.

However, heat is inevitably generated in the secondary battery during charging and discharging thereof, and thermal runaway may occur due to short circuit, thermal impact, insulation breakdown, etc. depending on circumstances, which leads to a major accident, such as fire outbreak and explosion.

In particular, it is not easy for a driver to recognize fire outbreak in a vehicle. Furthermore, when fire breaks out, rapid fire extinguishing is difficult, whereby the vehicle may be completely destroyed by fire, and a fatal accident due to explosion may occur.

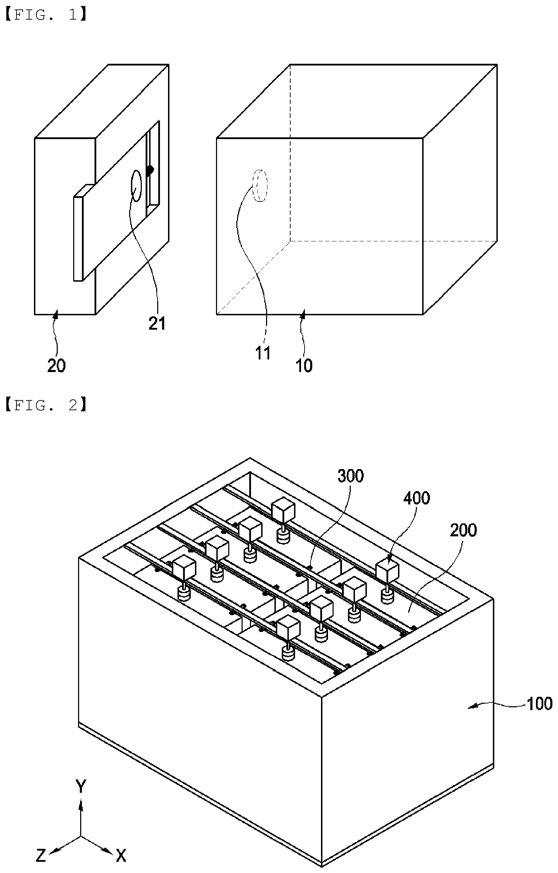

FIG. 1 is a perspective view of a conventional battery pack assembly. As shown in FIG. 1, the battery pack assembly includes a battery pack 10 having a first magnetic portion 11 and a detachment unit 20 having a second magnetic portion 21, the detachment unit being configured to detach the battery pack, wherein the battery pack is detached by magnetic coupling or release between the first magnetic portion 11 and the second magnetic portion 12.

However, the conventional battery pack assembly is attached to or detached from an electric tool or a charger, and only attachment and detachment of the battery pack that cannot be used in a vehicle is disclosed.

### (Prior Art Documents)

(Patent Document 1) Korean Patent Application Publication No. 2014-010084

US 5 432 019 A concerns a system for supplying electric power to a battery-operated vehicle comprising a support plate receiving several batteries. The batteries are detachably received on the support plate.

EP 3 624 300 A1 concerns an interface adapter to be fixed around a terminal of an electrochemical accumulator, integrating at least one magnetic bolt for magnetic fixing with electrical conduction from the terminal to a busbar. D3 provides a connection /disconnection between an output pole of a battery and a busbar using a magnetic bolt having a permanent magnet which closes the connection. The magnetic bolt releases the connection when a temperature goes over the Curie point of the magnet of the bolt.

US 2013/089990 A1concerns a modular interconnection system for power cells with a plurality of releasable contact regions. The releasable contact regions may be positioned to form a releasable electrical connection with a terminal of a power cell when a force is applied to the first releasable contact region in a direction toward the terminal of the power cell.

### [Disclosure]

### [Technical Problem]

The present invention has been made in view of the above problems, and it is an object of the present invention to provide a battery pack configured such that battery modules constituting the battery pack are detachably attached thereto while being mountable in a vehicle.

It is another object of the present invention to provide a battery pack having a structure capable of monitoring a battery module in which fire has broken out or a battery module having a high possibility of fire outbreak and separating a battery module determined to be in an abnormal state from the battery pack.

### [Technical Solution]

In order to accomplish the above objects, a battery pack according to the present invention includes a pack case (100), a plurality of battery modules (200) received in the pack case (100), a busbar (300) configured to electrically connect the plurality of battery modules (200) to each other, and a module holding unit (400) configured to fix the battery module (200) to the pack case (100) or to separate the battery module (200) from the pack case (100) where the module holding unit (400) includes a first permanent magnet (410) mounted to the battery module (200), a second permanent magnet (420) disposed to face the first permanent magnet (410), a rotary shaft (430) having one side connected to the second permanent magnet (420), and a motor (440) connected to the rotary shaft (430), wherein the motor (440) may be repeatedly rotated by 180 degrees such that repulsive force and attractive force are alternately generated between the first permanent magnet (410) and the second permanent magnet (420), whereby the battery module (200) may be received in or separated from the pack case (100), the motor (440) being be configured to be rotated according to a signal from a controller.

Also, in the battery pack according to the present invention, the pack case (100) may be provided with a support frame (111) disposed to cross the interior thereof, and the motor (440) may be fixed to the support frame (111).

Also, in the battery pack according to the present invention, each of the first permanent magnet (410) and the second permanent magnet (420) may be a circular plate or a quadrangular plate and may be configured such that an N pole and an S pole are provided at one surface thereof in symmetry.

Also, in the battery pack according to the present invention, the pack case (100) may be provided at a bottom surface thereof with a door (122) configured to allow the battery module (200) to fall downwards.

Also, in the battery pack according to the present invention, the door (122) may be provided in a same number as the battery modules (200).

Also, in the battery pack according to the present invention, the pack case (100) may be further provided with a door turning portion (123) configured to turn the door (122) and a door opening and closing portion (124).

Also, in the battery pack according to the present invention, the door opening and closing portion (124) may be operated to switch a locked state of the door (122) to an unlocked state according to a signal from the controller.

Also, in the battery pack according to the present invention, each of the plurality of battery modules (200) may be provided with a sensor (210) configured to sense an abnormal state thereof.

Also, in the battery pack according to the present invention, the sensor (210) may be a temperature sensor.

In addition, the battery pack according to the present invention may further include a controller configured to receive a signal from the sensor (210) and to apply overcurrent to the busbar (300) in an abnormal state.

Also, in the battery pack according to the present invention, the busbar (300) may be provided with a notch type fuse (320).

In addition, the present invention provides a method of separating an abnormal battery module from the battery pack in a state in which the battery pack is mounted in a vehicle, the method including a first step of the controller receiving state information from each of the battery modules, a second step of determining whether the state information received in the first step corresponds to an abnormal state, and a third step of separating a battery module corresponding to the abnormal state from the battery pack, wherein, in the third step, the motor (440) is rotated such that repulsive force is generated between the first permanent magnet (410) mounted to the battery module (200) and the second permanent magnet (420) disposed so as to face the first permanent magnet (410).

Also, in the method according to the present invention, in the third step, a signal is transmitted to the door opening and closing portion (124) such that a locked state of the door (122) is switched to an unlocked state, and the method may further include applying overcurrent to the busbar (300).

### [Advantageous Effects]

As is apparent from the above description, a battery pack according to the present invention has an advantage in that a door configured to be opened and closed and a module holding unit configured to fix or unfix each battery module are provided at a pack case, whereby it is possible to separate an abnormal battery module from the pack case.

In addition, the battery pack according to the present invention has a merit in that a sensor is mounted to each battery module in order to monitor whether the battery module is normal or abnormal, and a determination is made as to whether to separate the battery module based on the result of monitoring, whereby accurate determination is possible.

Furthermore, the battery pack according to the present invention has an advantage in that, since the battery pack has a structure capable of separating an abnormal battery module from the pack case, it is possible to protect vehicle passengers at the time of explosion of the battery pack.

### [Description of Drawings]

FIG. 1 is a perspective view of a conventional battery pack assembly.
FIG. 2 is a perspective view of a battery pack according to a preferred embodiment of the present invention.
FIG. 3 is an exploded perspective view of the battery pack shown in FIG. 2.
FIG. 4 is an enlarged bottom perspective view of the battery pack shown in FIG. 2.
FIG. 5 is a view showing a modification of a busbar used in the battery pack according to the present invention.
FIG. 6 is a partial sectional view of the battery pack shown in FIG. 2.
FIG. 7 is a partial plan view of the battery pack shown in FIG. 2.
FIG. 8 is an enlarged perspective view illustrating the principle by which a module holding unit is operated in the battery pack shown in FIG. 2.
FIG. 9 is a sectional view illustrating that a battery module is separated from the battery pack shown in FIG. 2.
FIG. 10 is a perspective view illustrating that the battery module is separated from the battery pack shown in FIG. 2.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack configured such that selective separation of battery modules is possible according to the present invention and a method of separating an abnormal battery module from the battery pack will be described with reference to the accompanying drawings.

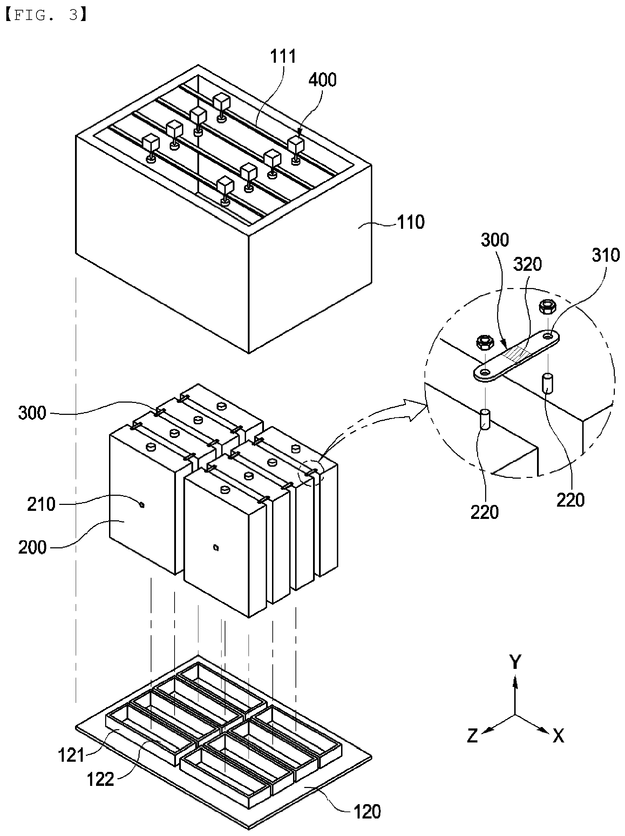

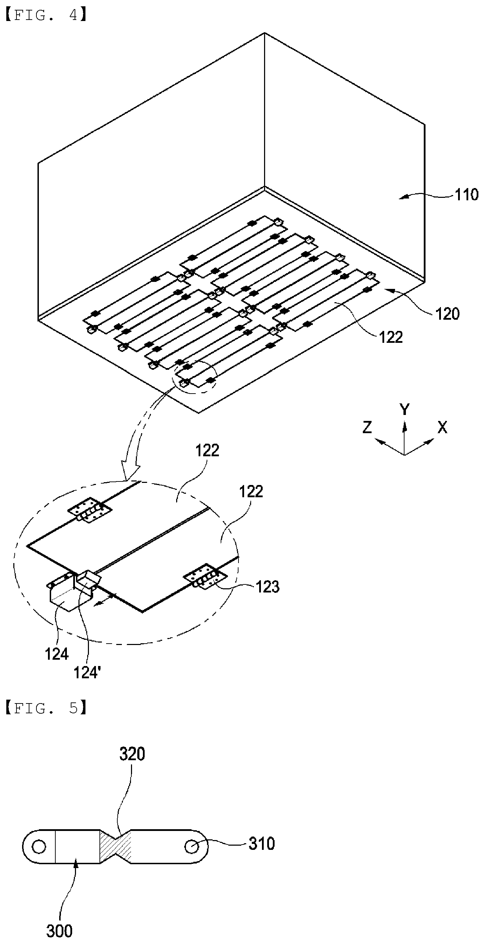

FIG. 2 is a perspective view of a battery pack according to a preferred embodiment of the present invention, FIG. 3 is an exploded perspective view of the battery pack shown in FIG. 2, and FIG. 4 is an enlarged bottom perspective view of the battery pack shown in FIG. 2.

As shown in FIGs. 2 to 4, the battery pack according to the preferred embodiment of the present invention includes a pack case 100, a plurality of battery modules 200, a busbar 300 configured to electrically connect the battery modules 200 to each other, a plurality of module holding units 400, and a controller (not shown).

Although a plurality of hexahedral battery modules 200 is shown as being erected in the figures, this is merely an example, and it is obvious that a wide surface of each of the battery modules may be disposed so as to face a bottom of the pack case 100.

First, the pack case 100 may be formed in the shape of a box configured to safely receive the plurality of battery modules 200, and may be constituted by a side case 110 configured to surround side surfaces of the battery modules 200 and a lower case 120 configured to support lower surfaces of the battery modules 200. Of course, the side case 110 and the lower case 120 may be integrally formed as a single case. Also, it is obvious that an upper cover may be provided, although not shown in the figures.

Meanwhile, a plurality of support frames 111 is provided at an upper part of the side case 110 at the inside thereof. Specifically, each support frame 111 is located so as to cross the interior of the side case 110, and opposite ends of the support frame are fixed to the inside of the side case 110. The support frames 111 are configured to fix a motor. In this regard, a description will follow.

The lower case 120 is provided at an upper surface thereof with a support plate 121 projecting by a predetermined height in a direction in which each battery module 200 is located. The support plate 121 supports lower end parts of four surfaces or two facing surfaces of the battery module 200 in order to inhibit movement of the battery module 200 due to external impact.

In addition, the lower case 120 is provided with a door 122 configured to open a predetermined part of the lower case, and a door turning portion 123 configured to turn the door 122 and a door opening and closing portion 124 are installed.

The door 122, the door turning portion 123, and the door opening and closing portion 124 are elements configured such that, when the battery modules are normally operated, the door 122 is closed, whereby the battery modules 200 remain received in the pack case 100, and when a specific battery module is abnormal, the door 122 is opened in order to separate the abnormal battery module from the pack case 100.

Consequently, it is preferable for the door 122 to be located at a lower surface of each battery module (200), and it is more preferable for the number of the doors to be equal to the number of the battery modules 200. Although the door 122 is shown as having a double door structure in the figures, this is merely an example, and the door may have a single door structure.

As an example, the door turning portion 123 may be a hinge, although the door turning portion is not particularly restricted as long as one side of the door turning portion 123 is fixed to the lower case 120 and the other side of the door turning portion is connected to the door 122 such that the door 122 can be turned by a predetermined angle.

The door opening and closing portion 124, which is configured to control opening and closing of the door 122, is provided at a lower surface of the lower case 120, more specifically at a position at which a latch 124' of the door opening and closing portion 124 can support the side or corner of the door 122 to which the door turning portion 123 is not mounted.

As an example, the door opening and closing portion 124 may be implemented by a solenoid type electromagnetic door locking member, and the latch 124' is moved forwards or backwards according to an external signal. The electromagnetic door locking member is known, and therefore a detailed description thereof will be omitted.

Next, the battery module 200 will be described. A plurality of battery cells is received in a module case with a cooling device, etc. in a state of being vertically or horizontally stacked.

Meanwhile, each of the battery cells may include a cell case having a pocket type receiving portion formed therein, an electrode assembly received in the cell case, an electrode tab, an electrode lead, and an insulative film.

The receiving portion of the cell case is formed using a laminate sheet constituted by an outer resin layer, a metal layer, and an inner resin layer.

The outer resin layer is located at an outer side of the cell case, and the outer resin layer may be made of a heat-resistant polymer that exhibits excellent tensile strength, resistance to moisture permeation, and resistance to air transmission such that the outer resin layer exhibits high heat resistance and chemical resistance while protecting the electrode assembly. As an example, the outer resin layer may be made of nylon or polyethylene terephthalate; however, the present invention is not limited thereto.

The metal layer, which abuts the outer resin layer, corresponds to a barrier layer configured to prevent moisture or various kinds of gas from permeating into the battery from the outside. An aluminum thin film, which is lightweight and easily shapeable, may be used as a preferred material for the metal layer.

The inner resin layer is disposed in direct contact with the electrode assembly, and therefore the inner resin layer must exhibit high insulation properties and high resistance to an electrolytic solution. In addition, the inner resin layer must exhibit high sealability in order to hermetically isolate the cell case from the outside, i.e. a thermally-bonded sealed portion between inner layers must exhibit excellent thermal bonding strength.

The inner resin layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The electrode assembly, which is received in the cell case, may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode is manufactured by applying a slurry mixture of a negative electrode active material and a binder to a negative electrode current collector.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tinbased alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiV₃O₄, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut or a separate conductive member is connected to the uncoated portion by ultrasonic welding to form the electrode tab.

The electrode lead is connected to the electrode tab by spot welding, and the insulative film is located around the electrode lead.

Meanwhile, it is preferable for a sensor 210 configured to sense a normal state or an abnormal state of the battery module 200 to be further provided at an outer surface or an inner surface of the battery module. The battery module 200 is repeatedly charged and discharged. Due to various internal or external causes, fire may break out in a specific battery module 200, or the temperature of the battery module may excessively increase and exceed a normal temperature range thereof.

The sensor 210, which is a sensor configured to sense whether the battery module 200 is abnormal, may be a temperature sensor capable of measuring the temperature of the battery module.

For example, when the measured temperature exceeds a normal operating temperature range of the battery module, it may be determined that the battery module having the sensor mounted thereto has overheated, whereby there is a high possibility of fire outbreak or fire has broken out.

Next, the busbar 300 will be described. The busbar 300 is configured to connect the plurality of battery modules 200 to each other in series or in parallel. A fastening hole 310 for electrical connection with an external terminals 220 of the battery module 200 may be provided in each of opposite edges of the busbar, and a fuse 320 may be provided in the middle of the busbar so as to be cut when overcurrent is applied thereto.

For example, when each of opposite ends of the busbar is made of copper (Cu), which has relatively low resistance and a high melting point, and the fuse 320 provided in the middle of the busbar is made of aluminum (Al), which has higher resistance than copper (Cu) and a low melting point, the fuse 320 made of aluminum (Al) is cut when overcurrent is applied thereto.

FIG. 5 shows a modification of the busbar used in the battery pack according to the present invention. As shown in FIG. 5, a notch may be formed in the fuse 320. When the notch is formed in the fuse 320, the area of the fuse through which current flows is reduced, whereby resistance is increased, and therefore temperature is rapidly increased. As a result, the fuse 320 may be rapidly cut when overcurrent is applied thereto.

Referring back to FIGs. 2 to 4, the module holding unit 400 is configured to fix the battery module 200 to the pack case 100 or to separate the battery module from the pack case 100. A detailed description thereof will follow.

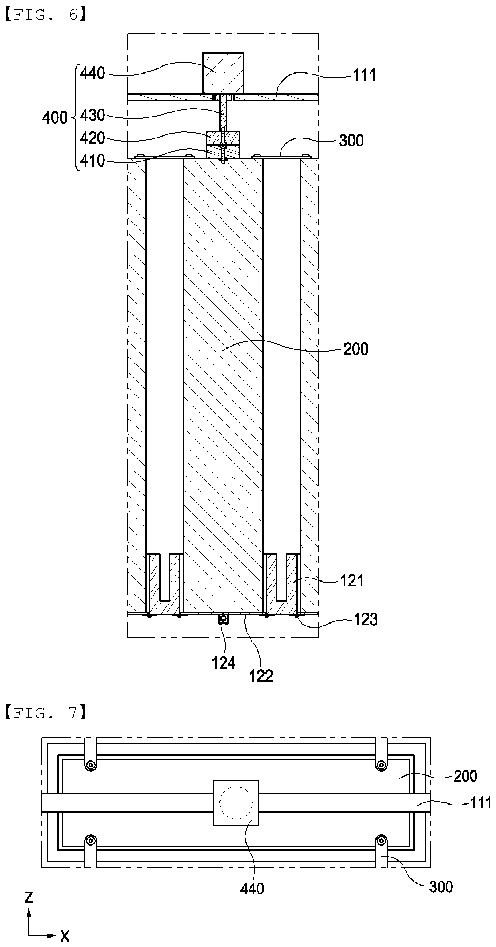

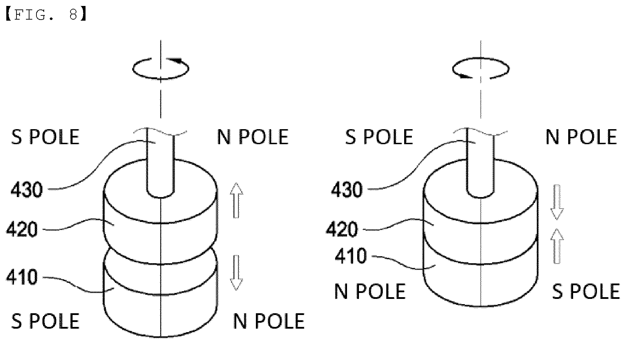

FIG. 6 is a partial sectional view of the battery pack shown in FIG. 2, FIG. 7 is a partial plan view of the battery pack shown in FIG. 2, and FIG. 8 is an enlarged perspective view illustrating the principle by which the module holding unit is operated in the battery pack shown in FIG. 2.

Referring to FIGs. 6 and 7, the module holding unit 400 may include a first permanent magnet 410 mounted to the battery module 200, a second permanent magnet 420 disposed so as to face the first permanent magnet 410, a rotary shaft 430 having one side connected to the second permanent magnet 420, and a motor 440 connected to the rotary shaft 430.

Specifically, each of the first permanent magnet 410 and the second permanent magnet 420 is formed in the shape of a circular plate or a quadrangular plate and is configured such that an N pole and an S pole are disposed in symmetry. When the S pole and the N pole of the second permanent magnet 420 are located respectively above the N pole and the S pole of the first permanent magnet 410, therefore, attractive force acts therebetween. When the second permanent magnet 420 is rotated 180 degrees in a horizontal direction and the N pole and the S pole of the second permanent magnet 420 are located respectively above the N pole and the S pole of the first permanent magnet 410, on the other hand, repulsive force acts therebetween.

The rotary shaft 430 and the motor 440 are configured to adjust the positions of the N pole and the S pole of the second permanent magnet 420. The motor 440 may be seated on an upper part of the support frame 111 of the pack case 100. When an upper cover is provided, however, the motor may be fixed to the upper cover.

Here, the motor 440 is not particularly restricted as long as the motor is rotatable according to a signal from the controller. As an example, the motor may be a stepping motor. The controller may be provided in the pack case 100, or an integrated stepping motor having a driving controller mounted therein may be used.

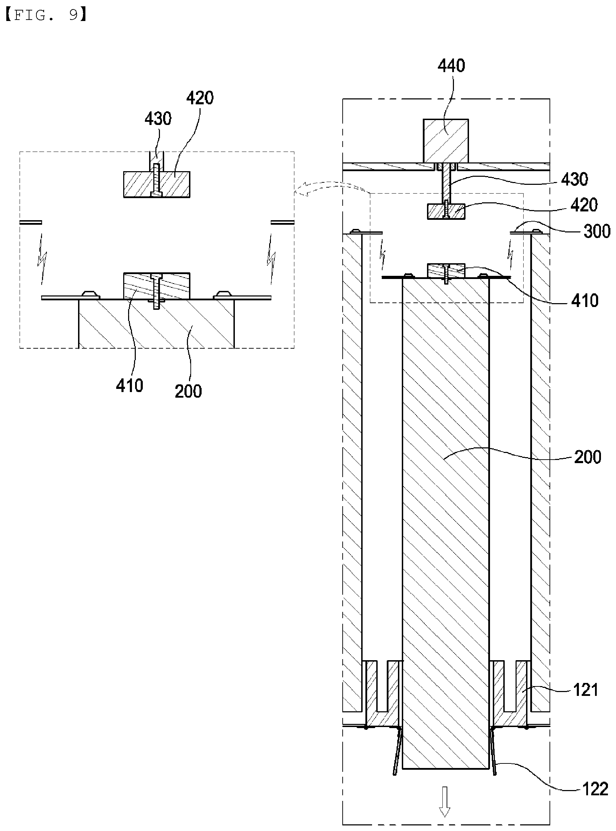

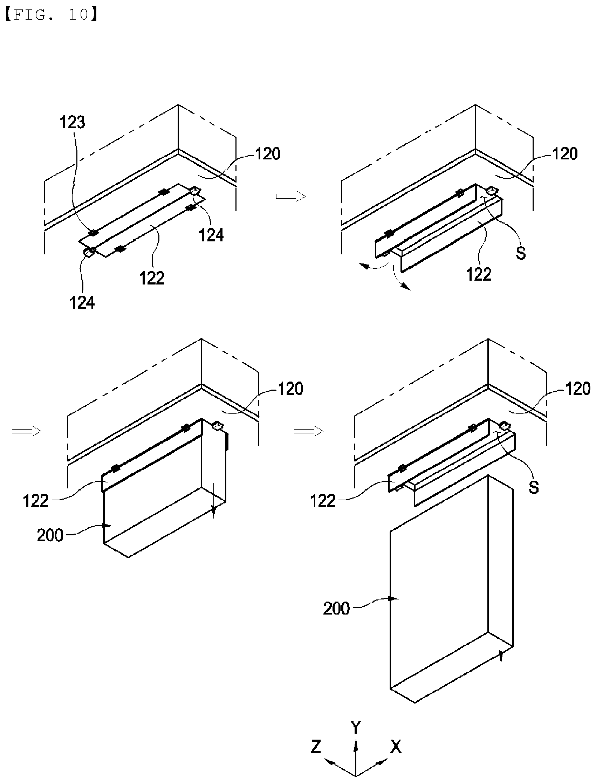

FIG. 9 is a sectional view illustrating that a battery module is separated from the battery pack shown in FIG. 2, and FIG. 10 is a perspective view illustrating that the battery module is separated from the battery pack shown in FIG. 2.

The principle by which the battery module is separated from the battery pack will be described with reference to FIGs. 9 and 10.

The sensor 210 mounted to each of the plurality of battery modules 200 measures the temperature of a corresponding one of the battery modules. When the temperature of a specific one of the battery modules 200 increases to a predetermined temperature or higher, the controller transmits a signal to the door opening and closing portion 124 and/or the motor 440.

Specifically, the signal is transmitted to the door opening and closing portion 124 such that the latch 124' supporting the door 122 is moved backwards and the door 122 is turned downwards. In addition, the signal is transmitted in order to rotate the motor 440 such that repulsive force acts between the first permanent magnet 410 and the second permanent magnet 420 mounted to the upper part of the battery module 200.

As a result, the abnormal battery module 200 falls downwards from the pack case 100 through an opening S by weight.

Meanwhile, when the temperature of the specific battery module 200 increases to a predetermined temperature or higher, it is more preferable to transmit a signal for overcurrent application to the battery module 200 such that the fuse 320 of the busbar 300 is rapidly cut.

A method of separating an abnormal battery module from the battery pack in the state in which the battery pack is mounted in a vehicle may include a first step of the controller receiving state information from each of the battery modules, a second step of determining whether the state information received in the first step corresponds to an abnormal state, and a third step of separating a battery module corresponding to the abnormal state from the battery pack.

In the third step, the motor 440 is rotated such that repulsive force acts between the first permanent magnet 410 mounted to the battery module 200 and the second permanent magnet 420 disposed so as to face the first permanent magnet 410, and a signal is transmitted to the door opening and closing portion 124 such that a locked state of the door 122 is switched to an unlocked state, as previously described. In addition, a step of applying overcurrent to the busbar 300 may be further included, as needed.

The present invention has been described above with reference to specific embodiments. However, those skilled in the art to which the present invention pertains will appreciate that various applications and modifications are possible within the scope of the appended claims, based on the above description.

### (Description of Reference Symbols)

- 100:: Pack case
- 110:: Side case
- 111:: Support frame
- 120:: Lower case
- 121:: Support plate 122: Door
- 123:: Door turning portion
- 124:: Door opening and closing portion 124': Latch
- 200:: Battery module
- 210:: Sensor 220: External terminal
- 300:: Busbar
- 310:: Fastening hole
- 320:: Fuse
- 400:: Module holding unit
- 410:: First permanent magnet
- 420:: Second permanent magnet
- 430:: Rotary shaft
- 440:: Motor
- S:: Opening

## Claims

1. A battery pack comprising:
- a pack case (100);
- a plurality of battery modules (200) received in the pack case;
- a busbar (300) configured to electrically connect the plurality of battery modules to each other; and
- a module holding unit (400) configured to fix the battery module to the pack case or to separate the battery module from the pack case, wherein the module holding unit (400) comprises:
- a first permanent magnet (410) mounted to the battery module (200);
- a second permanent magnet (420) disposed to face the first permanent magnet(410);
- a rotary shaft (430) having one side connected to the second permanent magnet;
**characterized in that** the module holding unit comprises a motor (440) connected to the rotary shaft (430),
wherein the motor (440) is repeatedly rotated by 180 degrees such that repulsive force and attractive force are alternately generated between the first permanent magnet (410) and the second permanent magnet (420), whereby the battery module (200) is received in or separated from the pack case and wherein the motor (440) is configured to be rotated according to a signal from a controller.

2. The battery pack according to claim 1, wherein the pack case (100) is provided with a support frame (111) disposed to cross an interior thereof, and
wherein the motor (440) is fixed to the support frame (111).

3. The battery pack according to claim 1, wherein each of the first permanent magnet (410) and the second permanent magnet (420) is a circular plate or a quadrangular plate and is configured such that an N pole and an S pole are provided at one surface thereof in symmetry.

4. The battery pack according to claim 1, wherein the pack case (100) is provided at a bottom surface thereof with a door (122) configured to allow the battery module (200) to fall downwards.

5. The battery pack according to claim 4, wherein the door (122) is provided in a same number as the battery modules (200) .

6. The battery pack according to claim 4, wherein the pack case (100) is further provided with a door turning portion (123) configured to turn the door (122) and a door opening and closing portion (124).

7. The battery pack according to claim 6, wherein the door opening and closing portion (124) is operated to switch a locked state of the door to an unlocked state according to a signal from said controller.

8. The battery pack according to claim 1, wherein each of the plurality of battery modules (200) is provided with a sensor (210) configured to sense an abnormal state thereof.

9. The battery pack according to claim 8, wherein the sensor (210) is a temperature sensor.

10. The battery pack according to claim 8, further comprising a controller configured to receive a signal from the sensor (210) and to apply overcurrent to the busbar (300) in an abnormal state.

11. The battery pack according to claim 10, wherein the busbar (300) is provided with a notch type fuse (320).

12. A method of separating an abnormal battery module from the battery pack according to any one of claims 1 to 11, the motor (440) being further configured to be rotated according to a signal from a controller, in a state in which the battery pack (100) is mounted in a vehicle,
**characterized in that** the method comprises:
a first step of the controller receiving state information from each of the battery modules (200);
a second step of determining whether the state information received in the first step corresponds to an abnormal state; and
a third step of separating a battery module (200) corresponding to the abnormal state from the battery pack,
wherein in the third step, the motor (440) is rotated such that repulsive force is generated between the first permanent magnet (410) mounted to the battery module and the second permanent magnet (420) disposed so as to face the first permanent magnet (410).

13. The method according to claim 12, wherein the pack case (100) being provided at a bottom surface thereof with a door (122) configured to allow the battery module (200) to fall downwards, said door (122) being provided in a same number as the battery modules (200), the pack case (100) being further provided with a door turning portion (123) configured to turn the door (122) and a door opening and closing portion (124), the door opening and closing portion (124) being operated to switch a locked state of the door to an unlocked state according to a signal from a controller,
Wherein in the third step, a signal is transmitted to the door opening and closing portion (124) such that a locked state of the door is switched to an unlocked state, and
the method further comprises applying overcurrent to the busbar (300).

## Patentansprüche

1. Batteriepack, umfassend:
- ein Packgehäuse (100);
- eine Mehrzahl von Batteriemodulen (200), welche in dem Packgehäuse aufgenommen sind;
- eine Stromschiene (300), welche dazu eingerichtet ist, die Mehrzahl von Batteriemodulen miteinander elektrisch zu verbinden; und
- eine Modulhalteeinheit (400), welche dazu eingerichtet ist, das Batteriemodul an dem Packgehäuse zu fixieren oder das Batteriemodul von dem Packgehäuse zu separieren, wobei die Modulhalteeinheit (400) umfasst:
- einen ersten Permanentmagneten (410), welcher an dem Batteriemodul (200) montiert ist;
- einen zweiten Permanentmagneten (420), welcher angeordnet ist, um dem ersten Permanentmagneten (410) zugewandt zu sein;
- einen Rotationsschaft (430), welcher eine Seite aufweist, welche mit dem zweiten Permanentmagneten verbunden ist;
**dadurch gekennzeichnet, dass** die Modulhalteeinheit einen Motor (440) umfasst, welcher mit dem Rotationsschaft (430) verbunden ist, wobei der Motor (440) wiederholt um 180 Grad derart rotiert wird, dass eine abstoßende Kraft und eine anziehende Kraft alternierend zwischen dem ersten Permanentmagneten (410) und dem zweiten Permanentmagneten (420) generiert werden, wodurch das Batteriemodul (200) in dem Packgehäuse aufgenommen oder davon separiert ist und wobei der Motor (440) dazu eingerichtet ist, gemäß einem Signal von einer Steuerung rotiert zu werden.

2. Batteriepack nach Anspruch 1, wobei das Packgehäuse (100) mit einem Halterungsrahmen (111) bereitgestellt ist, welcher angeordnet ist, um ein Inneres davon zu durchqueren, und
wobei der Motor (440) an dem Halterungsrahmen (111) fixiert ist.

3. Batteriepack nach Anspruch 1, wobei jeder von dem ersten Permanentmagnet (410) und dem zweiten Permanentmagnet (420) eine kreisförmige Platte oder eine viereckige Platte ist und derart eingerichtet ist, dass ein N-Pol und ein S-Pol an einer Fläche davon in Symmetrie bereitgestellt sind.

4. Batteriepack nach Anspruch 1, wobei das Packgehäuse (100) an einer Bodenfläche davon mit einer Tür (122) bereitgestellt ist, welche dazu eingerichtet ist, zuzulassen, dass das Batteriemodul (200) herunterfällt.

5. Batteriepack nach Anspruch 4, wobei die Tür (122) in einer gleichen Anzahl wie die Batteriemodule (200) bereitgestellt ist.

6. Batteriepack nach Anspruch 4, wobei das Packgehäuse (100) ferner mit einem Türwendeabschnitt (123), welcher dazu eingerichtet ist, die Tür (122) zu wenden, und mit einem Türöffnungs- und -schließabschnitt (124) bereitgestellt ist.

7. Batteriepack nach Anspruch 6, wobei der Türöffnungs- und -schließabschnitt (124) betrieben wird, um einen verschlossenen Zustand der Tür gemäß einem Signal von der Steuerung zu einem aufgeschlossenen Zustand zu wechseln.

8. Batteriepack nach Anspruch 1, wobei jedes von der Mehrzahl von Batteriemodulen (200) mit einem Sensor (210) bereitgestellt ist, welcher dazu eingerichtet ist, einen anormalen Zustand davon wahrzunehmen.

9. Batteriepack nach Anspruch 8, wobei der Sensor (210) ein Temperatursensor ist.

10. Batteriepack nach Anspruch 8, ferner umfassend eine Steuerung, welche dazu eingerichtet ist, ein Signal von dem Sensor (210) zu erhalten und in einem anormalen Zustand einen Überstrom auf die Stromschiene (300) anzuwenden.

11. Batteriepack nach Anspruch 10, wobei die Stromschiene (300) mit einer Kerben-Typ-Sicherung (320) bereitgestellt ist.

12. Verfahren zum Separieren eines anormalen Batteriemoduls von dem Batteriepack nach einem der Ansprüche 1 bis 11, wobei der Motor (440) ferner dazu eingerichtet ist, gemäß einem Signal von einer Steuerung in einem Zustand rotiert zu werden, in welchem der Batteriepack (100) in einem Fahrzeug montiert ist,
**dadurch gekennzeichnet, dass** das Verfahren umfasst:
einen ersten Schritt eines Erhaltens von Zustandsinformation durch die Steuerung von jedem der Batteriemodule (200);
einen zweiten Schritt eines Bestimmens, ob die Zustandsinformation, welche in dem ersten Schritt erhalten worden ist, einem anormalen Zustand entspricht; und einen dritten Schritt eines Separierens eines Batteriemoduls (200) von dem Batteriepack, welches dem anormalen Zustand entspricht, wobei in dem dritten Schritt der Motor (440) derart rotiert wird, dass eine abstoßende Kraft zwischen dem ersten Permanentmagneten (410), welche an dem Batteriemodul montiert ist, und dem zweiten Permanentmagneten (420) generiert wird, welcher angeordnet ist, um dem ersten Permanentmagneten (410) zugewandt zu sein.

13. Verfahren nach Anspruch 12, wobei das Packgehäuse (100) an einer Bodenfläche davon mit einer Tür (122) bereitgestellt ist, welche dazu eingerichtet ist, zuzulassen, dass das Batteriemodul (200) herunterfällt, wobei die Tür (122) in einer gleichen Anzahl wie die Batteriemodule (200) bereitgestellt ist, wobei das Packgehäuse (100) ferner mit einem Türwendeabschnitt (123), welcher dazu eingerichtet ist, die Tür (122) zu wenden, und mit einem Türöffnungs- und - schließabschnitt (124) bereitgestellt ist, wobei der Türöffnungs- und - schließabschnitt (124) betrieben wird, um einen verschlossenen Zustand der Tür gemäß einem Signal von einer Steuerung zu einem aufgeschlossenen Zustand zu wechseln,
wobei in dem dritten Schritt ein Signal an den Türöffnungs- und -schließabschnitt (124) derart übermittelt wird, dass ein verschlossener Zustand der Tür zu einem aufgeschlossenen Zustand gewechselt wird, und
das Verfahren ferner ein Anwenden eines Überstroms auf die Stromschiene (300) umfasst.

## Revendications

1. Bloc-batterie comprenant :
- un boîtier (100) de bloc-batterie ;
- une pluralité de modules de batterie (200) reçus dans le boîtier de bloc-batterie ;
- une barre omnibus (300) configurée pour connecter électriquement la pluralité de modules de batterie les uns aux autres ; et
- une unité de maintien de module (400) configurée pour fixer le module de batterie au boîtier de bloc-batterie ou pour séparer le module de batterie du boîtier de bloc-batterie, dans lequel l'unité de maintien de module (400) comprend :
- un premier aimant permanent (410) monté sur le module de batterie (200) ;
- un second aimant permanent (420) disposé de manière à faire face au premier aimant permanent (410) ;
- un arbre rotatif (430) ayant un côté relié au second aimant permanent ;
**caractérisé en ce que** l'unité de maintien de module comprend un moteur (440) relié à l'arbre rotatif (430),
dans lequel le moteur (440) est mis en rotation de 180 degrés à plusieurs reprises de sorte qu'une force de répulsion et une force d'attraction soient produites alternativement entre le premier aimant permanent (410) et le second aimant permanent (420), selon lequel le module de batterie (200) est reçu dans le ou séparé du boîtier de bloc-batterie et dans lequel le moteur (440) est configuré pour être mis en rotation selon un signal provenant d'un dispositif de commande.

2. Bloc-batterie selon la revendication 1, dans lequel le boîtier (100) de bloc-batterie est doté d'un cadre support (111) disposé pour traverser un intérieur de celui-ci, et dans lequel le moteur (440) est fixé au cadre support (111).

3. Bloc-batterie selon la revendication 1, dans lequel chacun du premier aimant permanent (410) et du second aimant permanent (420) est une plaque circulaire ou une plaque quadrangulaire et est configuré de sorte qu'un pôle N et un pôle S soient disposés symétriquement au niveau d'une surface de ceux-ci.

4. Bloc-batterie selon la revendication 1, dans lequel le boîtier (100) de bloc-batterie est doté, au niveau d'une surface inférieure de celui-ci, d'une porte (122) configurée pour permettre au module de batterie (200) de tomber vers le bas.

5. Bloc-batterie selon la revendication 4, dans lequel la porte (122) est présente en nombre identique à celui des modules de batterie (200).

6. Bloc-batterie selon la revendication 4, dans lequel le boîtier (100) de bloc-batterie est en outre doté d'une partie de rotation (123) de porte configurée pour faire tourner la porte (122) et d'une partie d'ouverture et de fermeture (124) de porte.

7. Bloc-batterie selon la revendication 6, dans lequel la partie d'ouverture et de fermeture (124) de porte est actionnée pour commuter un état verrouillé de la porte vers un état déverrouillé selon un signal provenant dudit dispositif de commande.

8. Bloc-batterie selon la revendication 1, dans lequel chacun de la pluralité de modules de batterie (200) est doté d'un capteur (210) configuré pour détecter un état anormal de celui-ci.

9. Bloc-batterie selon la revendication 8, dans lequel le capteur (210) est un capteur de température.

10. Bloc-batterie selon la revendication 8, comprenant en outre un dispositif de commande configuré pour recevoir un signal provenant du capteur (210) et pour appliquer une surintensité à la barre omnibus (300) dans un état anormal.

11. Bloc-batterie selon la revendication 10, dans lequel la barre omnibus (300) est dotée d'un fusible de type cranté (320).

12. Procédé de séparation d'un module de batterie anormal du bloc-batterie selon l'une quelconque des revendications 1 à 11, le moteur (440) étant en outre configuré pour être mis en rotation selon un signal provenant d'un dispositif de commande, dans un état dans lequel le bloc-batterie (100) est monté dans un véhicule, **caractérisé en ce que** le procédé comprend :
une première étape du dispositif de commande recevant des informations d'état de chacun des modules de batterie (200) ;
une deuxième étape de détermination pour établir si les informations d'état reçues à la première étape correspondent à un état anormal ; et
une troisième étape de séparation d'un module de batterie (200) correspondant à l'état anormal du bloc-batterie, dans lequel
à la troisième étape, le moteur (440) est mis en rotation de qu'une force de répulsion soit produite entre le premier aimant permanent (410) monté sur le module de batterie et le second aimant permanent (420) disposé de manière à faire face au premier aimant permanent (410).

13. Procédé selon la revendication 12, dans lequel le boîtier (100) de bloc-batterie est disposé au niveau d'une surface inférieure de celui-ci avec une porte (122) configurée pour permettre au module de batterie (200) de tomber vers le bas, ladite porte (122) étant présente en nombre identique à celui des modules de batterie (200), le boîtier (100) de bloc-batterie étant en outre doté d'une partie de rotation (123) de porte configurée pour faire tourner la porte (122) et d'une partie d'ouverture et de fermeture (124) de porte, la partie d'ouverture et de fermeture (124) de porte étant actionnée pour commuter un état verrouillé de la porte vers un état déverrouillé selon un signal provenant d'un dispositif de commande,
dans lequel, à la troisième étape, un signal est envoyé à la partie d'ouverture et de fermeture (124) de porte de sorte qu'un état verrouillé de la porte soit commuté vers un état déverrouillé, et
le procédé comprend en outre l'application d'une surintensité à la barre omnibus (300).
